# EUROPÄISCHE PATENTSCHRIFT

(11) **EP 2 508 059 B1**
(45) Veröffentlichungstag und Bekanntmachung des Hinweises auf die Patenterteilung: **23.04.2014**
(21) Anmeldenummer: 12401051.3
(22) Anmeldetag: 30.03.2012
(51) Int. Cl.: A01C 7/10, A01C 17/00

(54) **Verteilmaschine**
Spreader
Distributeur

(30) Priorität: 08.04.2011 DE 102011001914
(43) Veröffentlichungstag der Anmeldung: 10.10.2012
(73) Patentinhaber: Amazonen-Werke H. Dreyer GmbH & Co. KG, 49205 Hasbergen (DE)
(72) Erfinder: Johannaber, Stefan, Jan, 49536 Lienen (DE); Lampert, Tobias, 49504 Lotte (DE)

(56) Entgegenhaltungen:
- EP-B1- 0 495 237

## Beschreibung

Die Erfindung betrifft eine Verteilmaschine gemäß des Oberbegriffes des Patentanspruches 1.

Eine derartige Verteilmaschine ist beispielsweise durch die EP 0 495 237 B1 bekannt. Bei der Verteilmaschine nach dem Ausführungsbeispiel gemäß den Fig. 1 bis 2 ist die Abdrehauslauföffnung in einer der beiden Seitenwände angeordnet. Diese Seitenwand, in der die Abdrehauslauföffnung angeordnet ist, weist etwa die Neigung auf, die der Neigung der Seitenwand entspricht, in welcher die Auslassöffnung des eigentlichen Dosierorgans angeordnet ist.

Der Erfindung liegt die Aufgabe zu Grunde, vorteilhafte Anordnungen der Abdrehauslauföffnung für Verteilmaschine vorzuschlagen, bei denen die Auslassöffnung des Dosierorgans in Flächen, die möglichst flach verlaufend ausgerichtet sind, angeordnet sind.

Diese Aufgabe wird erfindungsgemäß dadurch gelöst, dass der Wandbereich, in dem die Abdrehöffnung angeordnet ist, eine geringere Neigung als die Behälterwände des trichterförmigen Bereiches des Vorratsbehälters aufweist. Infolge dieser Maßnahme wird die Abdrehauslauföffnung in einem Bereich angeordnet, der flacher als die eigentlichen Behälterwände des Vorratsbehälters verlaufen und die Möglichkeit bietet hier einen Bereich zu schaffen, der an die Ausrichtung der Fläche, in der die Auslassöffnung des Dosierorgans angeordnet ist, zumindest angenähert ist.

Die erfindungsgemäße Anordnung der Abdrehauslauföffnung lässt sich in einfacher Weise dadurch erreichen Bei Verteilmaschine, bei denen die Auslassöffnung des Dosierorgan in einer zu der Horizontalen parallel verlaufenden Ebene angeordnet ist, hat sich als vorteilhaft herausgestellt, dass der Wandbereich, in dem die Abdrehöffnung angeordnet ist, eine Neigung zur Horizontalen von kleiner als 25° aufweist.

Eine besonders vorteilhafte Anordnung der Auslassöffnung bei Verteilmaschinen, bei denen die Auslassöffnung des Dosierorgan in einer zu der Horizontalen parallel verlaufenden Ebene angeordnet ist, ergibt sich dadurch, dass der Wandbereich, in dem die Abdrehöffnung angeordnet ist, zumindest annähernd horizontal verlaufend ausgebildet ist.

In einfacher Weise lässt sich der flachere Neigungsbereich, in dem die Abdrehauslauföffnung angeordnet ist, dadurch verwirklichen, dass der Wandbereich, in dem die Abdrehauslauföffnung angeordnet ist, zur Schaffung des flacheren Neigungsbereiches gegenüber den Behälterwänden des trichterförmigen Bereiches des Vorratsbehälters als Einprägung in der Behälterwand ausgestaltet ist.

In einer anderen Ausgestaltung ist vorgesehen, dass der Wandbereich, in dem die Abdrehöffnung angeordnet ist, zur Schaffung des flacheren Neigungsbereiches gegenüber den Behälterwänden des trichterförmigen Bereiches des Vorratsbehälters als Einsatzelement in der Behälterwand ausgestaltet ist.

Eine vorteilhafte Anordnung der Abdrehauslauföffnung lässt sich in einfacher Weise sich dadurch erreichen, dass die Abdrehauslauföffnung in einem der Eckbereiche des trichterförmigen Bereiches des Vorratsbehälters angeordnet ist. Hierdurch wird die Abdrehauslauföffnung in einem Bereich angeordnet, der einerseits gut zugänglich ist und andererseits die Möglichkeit eröffnet, dass die Abdrehauslauföffnung in einem Bereich angeordnet ist, der flacher als die eigentlichen Behälterwände des Vorratsbehälters verlaufen und die Möglichkeit bietet hier einen Bereich zu schaffen, der an die Ausrichtung der Fläche, in der die Auslassöffnung des Dosierorgans angeordnet ist, zumindest angenähert ist.

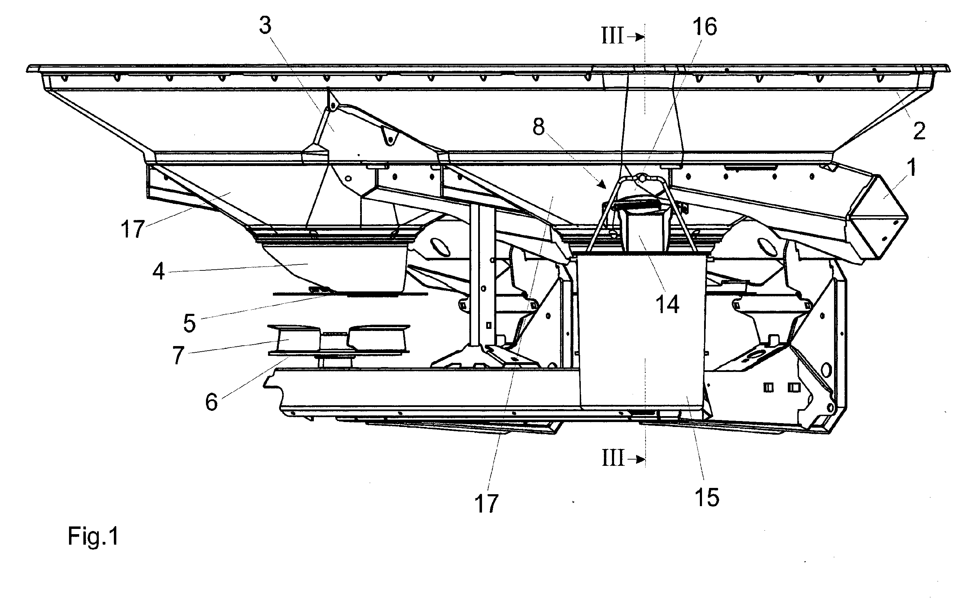

Weitere Einzelheiten der Erfindung sind der Beispielsbeschreibung und den Zeichnungen zu entnehmen. Hierbei zeigen
- Fig. 1: eine als Schleuderdüngerstreuer ausgebildete Verteilmaschine mit dem separaten Dosierorgan in perspektivischer Darstellung und in Prinzipdarstellung,

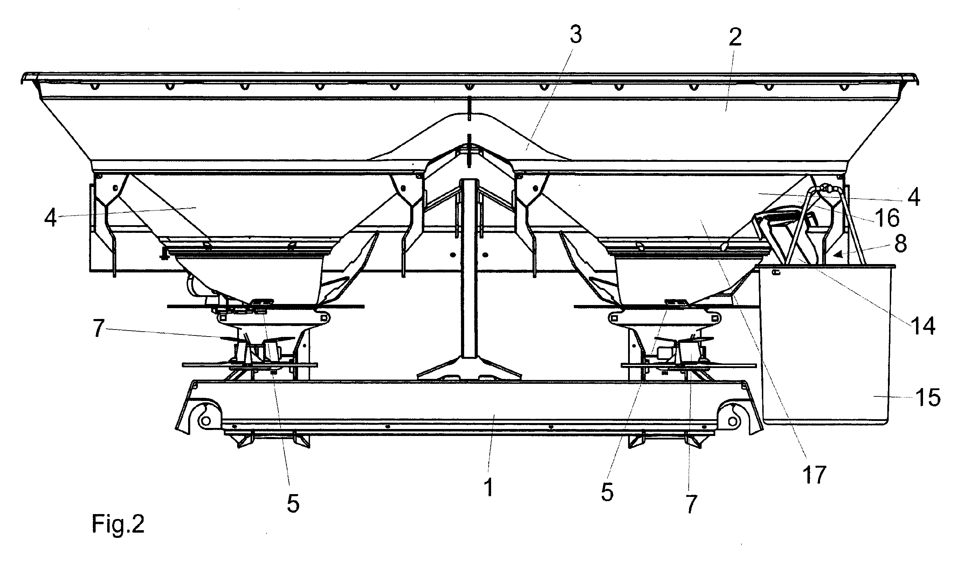

- Fig. 2: den Schleuderdüngerstreuer mit dem separaten Dosierorgan in der Ansicht von hinten und in Prinzipdarstellung,

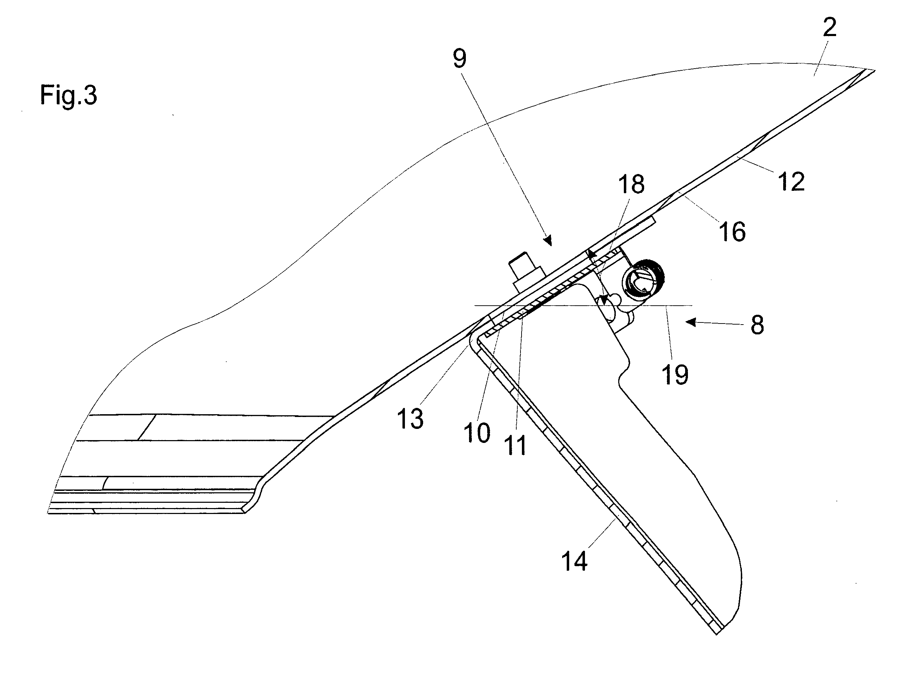

- Fig. 3: die Anordnung des separaten Dosierorgans an dem Vorratsbehälter des Schleuderdüngerstreuers im Schnitt gemäß der Ansicht III - III im vergrößerten Maßstab

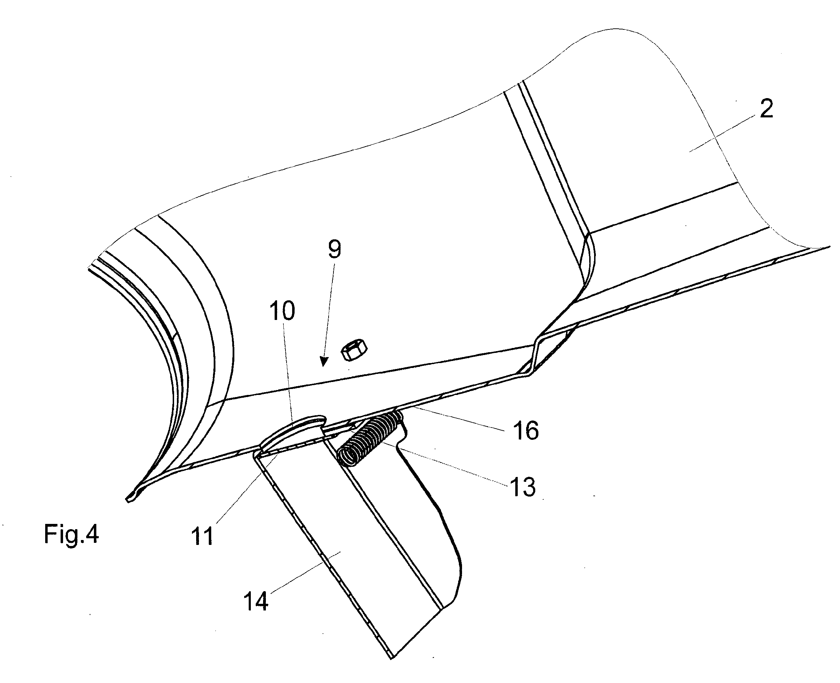

- Fig. 4: die Anordnung des separaten Dosierorgans an dem Vorratsbehälter des Schleuderdüngerstreuers in der Ansicht III - III und in perspektivischer Darstellung und im vergrößerten Maßstab,
- Fig. 5: eine weitere Anordnung des separaten Dosierorgans in der Darstellungsweise gemäß Fig.3 und
- Fig. 6: eine weitere Anordnung des separaten Dosierorgans in der Darstellungsweise gemäß Fig.3.

Die als Schleuderdüngerstreuer ausgebildete Verteilmaschine weist den Rahmen 1 und den Vorratsbehälter 2 auf. Der Vorratsbehälter 2 ist in seinem unteren Bereich durch das dachförmige Mittelteil 3 in die beiden Auslauftrichter 4 unterteilt. In dem Boden des jeweiligen Auslauftrichters sind die Auslauföffnungen der Dosierorgane 5 in bekannter Weise angeordnet. Diese Auslassöffnungen werden, ebenfalls in bekannter Weise über Schieber in ihrer Öffnungsweite eingestellt, um die gewünschte Ausbringmenge den unterhalb der Dosierorgane 5 angeordneten motorisch angetriebenen Schleuderscheiben 6, auf denen Wurfschaufeln 7 angeordnet sind, jeweils zuzuführen. Die Größe der freigegebenen Fläche der Auslassöffnung der Dosierorgane 5 bestimmt die der jeweiligen Schleuderscheibe 6 zugeleiteten Ausbringmenge. Die den Schleuderscheiben 6 von den Dosierorganen 5 zudosierten Düngemittel werden von den auf den Schleuderscheiben 6 angeordneten Wurfschaufeln 7 in Bereitverteilung auf der Bodenoberfläche verteilt.

Für das Durchführen einer Abdrehprobe ist der Schleuderdüngerstreuer mit einer speziellen Abdrehvorrichtung 8 ausgestattet. Diese Abdrehvorrichtung 8 befindet sich seitlich am Vorratsbehälter 2. Diese Abdrehvorrichtung 8 ist ein separates Dosierorgan 9. Dieses separate Dosierorgan 9 dient ausschließlich der Durchführung der Abdrehprobe. Dieses separate Dosierorgan 9 weist die Auslassöffnung 10 und den Schieber 11 auf. Hierzu befindet sich in der Seitenwand 12 des Vorratsbehälters 2 die Auslassöffnung 10. Vor der Auslassöffnung 10 ist die Halterung 13 angeordnet. An der Halterung 13 ist eine U-förmige Rutsche 14 angeordnet, an welcher der Auffangbehälter 15 eingehängt werden kann. An dem Schieber 11 ist eine Betätigungseinrichtung angeordnet, mittels welchem zur Durchführung der Abdrehprobe der Schieber 11 betätigt wird, so dass die Auslassöffnung 10 während der Abdrehprobe entsprechend freigegeben werden kann.

Die grundsätzliche Durchführung der Abdrehprobe und die Einstellung der Dosierorgane 5 geschieht entsprechend den Ausführungen in der EP 0 495 237 B1.

Der Vorratsbehälter 2 weist die Auslauftrichter 4 mit zumindest annähernd rechteckigem Querschnitt in seinem überwiegenden Teilbereichen auf. In dem Bereich mit dem rechteckigen Querschnitt weisen die Auslauftrichter 4 des Vorratsbehälters 2 abgerundete und/oder abgeflachte Bereiche 16 auf. In diesem abgerundeten und oder abgeflachten Eckbereichen 16 ist die Abdrehauslauföffnung 10 angeordnet. Der Wandbereich der Wand der Eckbereiche 16 der Auslauftrichter 4 des Vorratsbehälters 2, in dem die Abdrehauslauföffnung 10 angeordnet ist, weist eine geringere Neigung als die übrigen Behälterwände 17 des trichterförmigen Bereiches 4 des Vorratsbehälters 2 auf.

Der Wandbereich, in dem die Abdrehauslauföffnung 10 angeordnet ist, weist eine Neigung 18 von kleiner als 25° zur Horizontalen 19 auf.

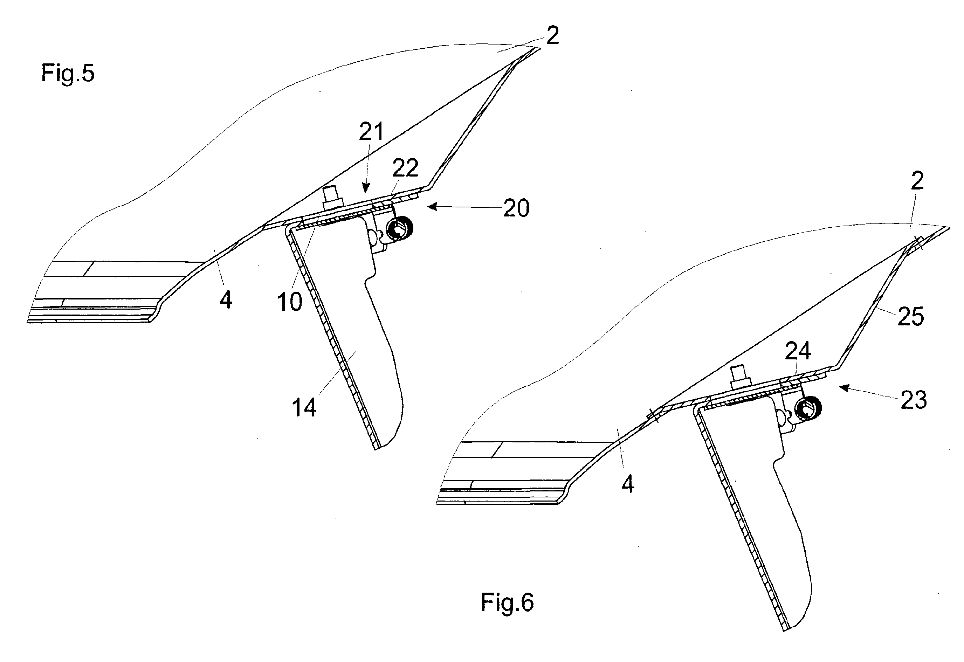

Bei dem Ausführungsbeispiel gemäß Fig. 5 ist die Abdrehauslauföffnung 10 in einem Wandbereich 20 des trichterförmigen Bereiches 4 des Vorratsbehälters 2 angeordnet, welcher zumindest annähernd horizontal verlaufend ausgebildet ist. Zur Schaffung des flacheren Neigungsbereiches 21, der annähernd horizontal verlaufend ausgebildet ist, des Wandbereiches 20 des trichterförmigen Bereiches 4 des Vorratsbehälters 2 ist als Einprägung 22 in der Behälterwand ausgebildet.

Bei dem Ausführungsbeispiel gemäß Fig. 6 ist die Abdrehauslauföffnung 10 in einem Wandbereich 23 des trichterförmigen Bereiches 4 des Vorratsbehälters 2 angeordnet, welcher zumindest annähernd horizontal verlaufend ausgebildet ist. Zur Schaffung des flacheren Neigungsbereiches 24, der annähernd horizontal verlaufend ausgebildet ist, des Wandbereiches 23 des trichterförmigen Bereiches 4 des Vorratsbehälters 2 ist als Einsatzelement 25 in der Behälterwand ausgebildet.

## Patentansprüche

1. Verteilmaschine mit einem Vorratsbehälter (2) mit zumindest einem als mit über zumindest einen Schieber zumindest eine einstellbare Auslauföffnung aufweisenden Dosierorgan, über welches das auszubringende Material zumindest einem unterhalb des zumindest einen Dosierorgans (5) angeordneten Schleuderscheibe (6) zugeführt wird, wobei zusätzlich zu dem den Verteilorgan zugeordneten Dosierorgan (5) ein separates Dosierorgan (9) zum Durchführen der Abdrehprobe vorgesehen ist, wobei dieses zum Durchführen der Abdrehprobe vorgesehene Dosierorgan (9) als mit einem Schieber zu öffnende und zu verschließende Abdrehauslauföffnung ausgebildet ist, wobei die Abdrehauslauföffnung in einer der Behälterwände des trichterförmigen Bereiches des Vorratsbehälters (2) angeordnet ist, **dadurch gekennzeichnet, dass** der Wandbereich, in dem die Abdrehauslauföffnung (10) angeordnet ist, eine geringere Neigung als die Behälterwände des trichterförmigen Bereiches (4) des Vorratsbehälters (2) aufweist.

2. Verteilmaschine nach Anspruch 1, **dadurch gekennzeichnet, dass** der Wandbereich, in dem die Abdrehauslauföffnung (10) angeordnet ist, eine Neigung (18) zur Horizontalen (19) von kleiner als 25° aufweist.

3. Verteilmaschine nach Anspruch 1, **dadurch gekennzeichnet, dass** der Wandbereich, in dem die Abdrehöffnung (10) angeordnet ist, zumindest annähernd horizontal verlaufend ausgebildet ist.

4. Verteilmaschine nach Anspruch 1, **dadurch gekennzeichnet, dass** der Wandbereich, in dem die Abdrehauslauföffnung (10) angeordnet ist, zur Schaffung des flacheren Neigungsbereiches gegenüber den Behälterwänden des trichterförmigen Bereiches (4) des Vorratsbehälters (2) als Einprägung (24) in der Behälterwand ausgestaltet ist.

5. Verteilmaschine nach Anspruch 1, **dadurch gekennzeichnet, dass** der Wandbereich, in dem die Abdrehöffnung angeordnet ist, zur Schaffung des flacheren Neigungsbereiches gegenüber den Behälterwänden des trichterförmigen Bereiches (4) des Vorratsbehälters als Einsatzelement (25) in der Behälterwand ausgestaltet ist.

6. Verteilmaschine nach zumindest einem der vorstehenden Ansprüche, wobei der trichterförmige Bereich des Vorratsbehälters zumindest in einem Teilbereich einen zumindest annähernd rechteckigen Querschnitt mit abgerundeten und/oder abgeflachten Eckbereichen aufweist, **dadurch gekennzeichnet, dass** die Abdrehauslauföffnung (10) in einem der Eckbereiche (16) des trichterförmigen Bereiches (4) des Vorratsbehälters (2) angeordnet ist.

## Claims

1. Spreader with a storage container (2) having at least one metering member which has at least one outlet opening which is adjustable via at least one slide and via which the material which is to be discharged is supplied to at least one centrifugal disc (6) arranged below the at least one metering member (5), wherein, in addition to the metering member (5) assigned to the spreading member, a separate metering member (9) is provided for carrying out the calibration test, wherein said metering member (9) provided for carrying out the calibration test is designed as a calibration outlet opening which is to be opened and closed by a slide, wherein the calibration outlet opening is arranged in one of the container walls of the funnel-shaped region of the storage container (2), **characterized in that** the wall region in which the calibration outlet opening (10) is arranged has a smaller inclination than the container walls of the funnel-shaped region (4) of the storage container (2).

2. Spreader according to Claim 1, **characterized in that** the wall region in which the calibration outlet opening (10) is arranged has an inclination (18) with respect to the horizontal (19) of less than 25°.

3. Spreader according to Claim 1, **characterized in that** the wall region in which the calibration opening (10) is arranged is designed so as to extend at least approximately horizontally.

4. Spreader according to Claim 1, **characterized in that** the wall region in which the calibration outlet opening (10) is arranged is designed as an impression (24) in the container wall in order to create the flatter region of inclination in relation to the container walls of the funnel-shaped region (4) of the storage container (2).

5. Spreader according to Claim 1, **characterized in that** the wall region in which the calibration opening is arranged is configured as an insert element (25) in the container wall in order to create the flatter region of inclination in relation to the container walls of the funnel-shaped region (4) of the storage container.

6. Spreader according to at least one of the preceding claims, wherein the funnel-shaped region of the storage container has, at least in a subregion, an at least approximately rectangular cross section with rounded and/or flattened corner regions, **characterized in that** the calibration outlet opening (10) is arranged in one of the corner regions (16) of the funnel-shaped region (4) of the storage container (2).

## Revendications

1. Machine distributrice comprenant un réservoir de stockage (2) pourvu d'au moins un organe de dosage comprenant au moins une ouverture de sortie pouvant être ajustée par le biais d'au moins un tiroir, par le biais duquel organe de dosage le matériau à épandre est acheminé jusqu'à au moins un disque centrifuge (6) disposé en dessous de l'au moins un organe de dosage (5), un organe de dosage séparé (9) pour effectuer l'essai de calibrage étant prévu en plus de l'organe de dosage (5) associé à l'organe de distribution, cet organe de dosage (9) prévu pour effectuer l'essai de calibrage étant réalisé sous forme d'ouverture de sortie de calibrage devant être ouverte et fermée à l'aide d'un tiroir, l'ouverture de sortie de calibrage étant située dans l'une des parois de récipient de la région en forme d'entonnoir du réservoir de stockage (2), **caractérisée en ce que** la région de paroi dans laquelle l'ouverture de sortie de calibrage (10) est située présente une inclinaison plus faible que celle des parois de récipient de la région (4) en forme d'entonnoir du réservoir de stockage (2).

2. Machine distributrice selon la revendication 1, **caractérisée en ce que** la région de paroi dans laquelle l'ouverture de sortie de calibrage (10) est située présente une inclinaison (18) par rapport à l'horizontale (19) de moins de 25°.

3. Machine distributrice selon la revendication 1, **caractérisée en ce que** la région de paroi dans laquelle l'ouverture de calibrage (10) est située est réalisée de manière à s'étendre au moins approximativement horizontalement.

4. Machine distributrice selon la revendication 1, **caractérisée en ce que** la région de paroi dans laquelle l'ouverture de sortie de calibrage (10) est située est configurée sous forme d'empreinte (24) dans la paroi de récipient, pour obtenir la région d'inclinaison plus plate par rapport aux parois de récipient de la région (4) en forme d'entonnoir du réservoir de stockage (2).

5. Machine distributrice selon la revendication 1, **caractérisée en ce que** la région de paroi dans laquelle l'ouverture de calibrage est située est configurée sous forme d'élément d'insertion (25) dans la paroi de récipient, pour obtenir la région d'inclinaison plus plate par rapport aux parois de récipient de la région (4) en forme d'entonnoir du réservoir de stockage.

6. Machine distributrice selon au moins l'une quelconque des revendications précédentes, dans laquelle la région en forme d'entonnoir du réservoir de stockage présente, au moins dans une région partielle, une section transversale au moins approximativement rectangulaire pourvue de régions de coin arrondies et/ou aplaties, **caractérisée en ce que** l'ouverture de sortie de calibrage (10) est située dans l'une des régions de coin (16) de la région (4) en forme d'entonnoir du réservoir de stockage (2).
